# EUROPEAN PATENT APPLICATION

(11) **EP 2 484 639 A1**
(43) Date of publication of application: **08.08.2012**
(21) Application number: 11194814.7
(22) Date of filing: 21.12.2011
(51) Int. Cl.: C02F 1/78, C02F 1/28, E03B 1/04

(54) **System for depurating and reusing greywater by disinfecting the greywater with ozone**

(30) Priority: 07.02.2011 IT MI20110169
(71) Applicant: ISEA S.p.A., 29100 Piacenza (IT)
(72) Inventor: Scaciga della Silva, Diego, 29100 Piacenza (IT)
(74) Representative: Cicogna, Franco

(57) **Abstract**

A system (1) for depurating and reusing grey water, by disinfecting said grey water with ozone, characterized in that said system (1) comprises tandem arranged pre-filtering means (2), bio-filtering means (3) and disinfecting means (4), said pre-filtering means (2) performing a pre-filtering by causing said grey water to fall at an inlet of the system, to restrain coarse materials in said grey water, said bio-filtering means (3) comprising a plurality of filtering layers performing a gradual physical depuration of water flows to be further filtered coming from the pre-filtering means, through filtering layers from downward to upward, filtered water being finally caused to pass through said disinfecting means (4) feeding ozone into an accumulation and contact basin.

## Description

### BACKGROUND OF THE INVENTION

The present invention relates to a system for depurating and reusing greywater, by disinfecting the greywater with ozone.

As it is known, "greywater" is that water which, in a home, comes from basins, showers, dish and linen washing machines, and so on.

### SUMMARY OF THE INVENTION

The aim of the present invention is to provide a system designed for processing greywater to allow said greywater to be reused and conveyed to WC boxes, for irrigating garden, cleaning buildings, and so on.

Within the scope of the above mentioned aim, a main object of the invention is to provide such a system which does not include any basin projecting from the ground.

Another object of the invention is to provide such a system allowing to hold a high quality level of the processed water.

Yet another object of the present invention is to provide such a system which has a very small electric consume.

Yet another object of the present invention is to provide such a system which may fully automatically operate.

Yet another object of the present invention is to provide such a system which, owing to its specifically designed features, is very reliable and safe in operation.

According to one aspect of the present invention, the above mentioned aim and objects, as well as yet other objects, which will become more apparent hereinafter, are achieved by a system for depurating and reusing greywater, by disinfecting said greywater with ozone, characterized in that said system comprises, tandem arranged, pre-filtering means, bio-filtering means and disinfecting means.

Said pre-filtering means perform a pre-filtering by causing said greywater to fall at an inlet of the system, to restrain coarse materials in said greywater.

Said bio-filtering means comprise a plurality of filtering layers performing a gradual physical depuration of water flows to be further filtered coming from the pre-filtering means, through filtering layers from downward to upward.

Filtered water being finally caused to pass through said disinfecting means feeding ozone into an accumulation and contact basin.

### BRIEF DESCRIPTION OF THE DRAWINGS

Further characteristics and advantages of the present invention will become more apparent hereinafter from the following disclosure of a preferred, though not exclusive, embodiment of the invention, which is illustrated, by way of an indicative, but not limitative, example in the accompanying drawings, where:

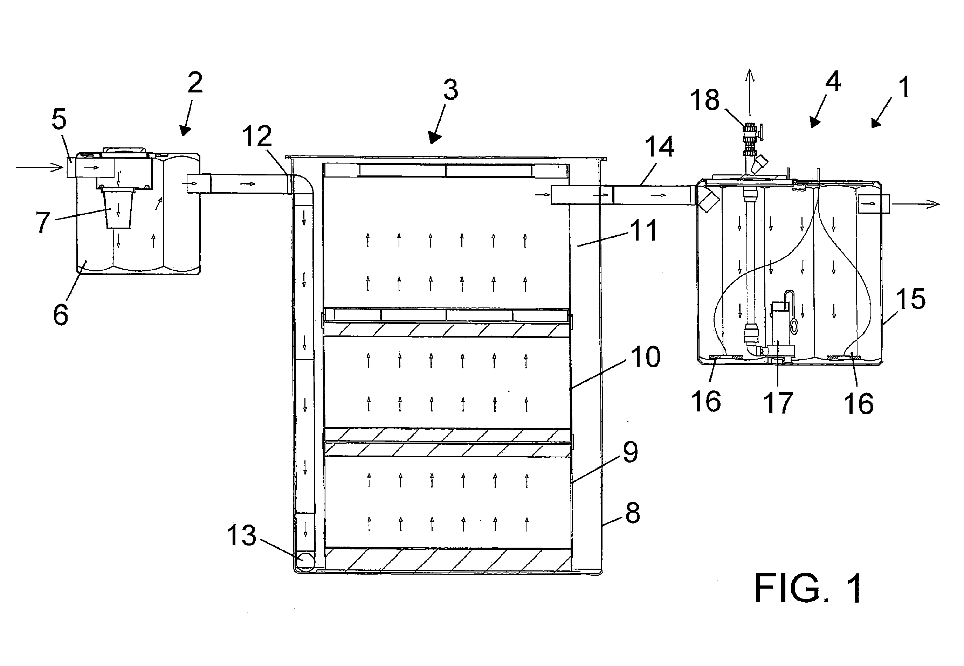

Figure 1 is a cross-sectioned elevation view showing the system according to the present invention;

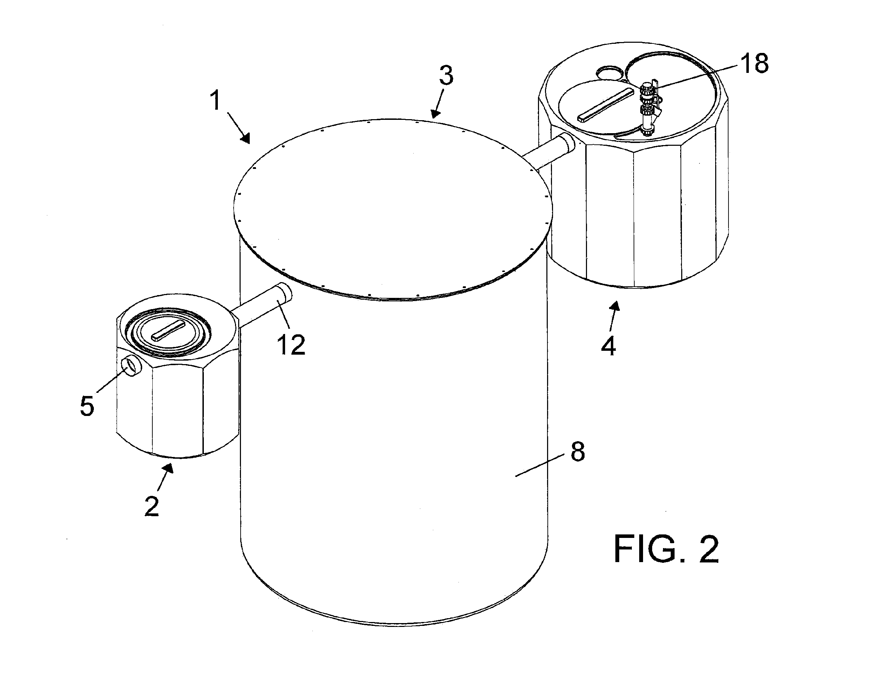

Figure 2 is a perspective view of the inventive system;

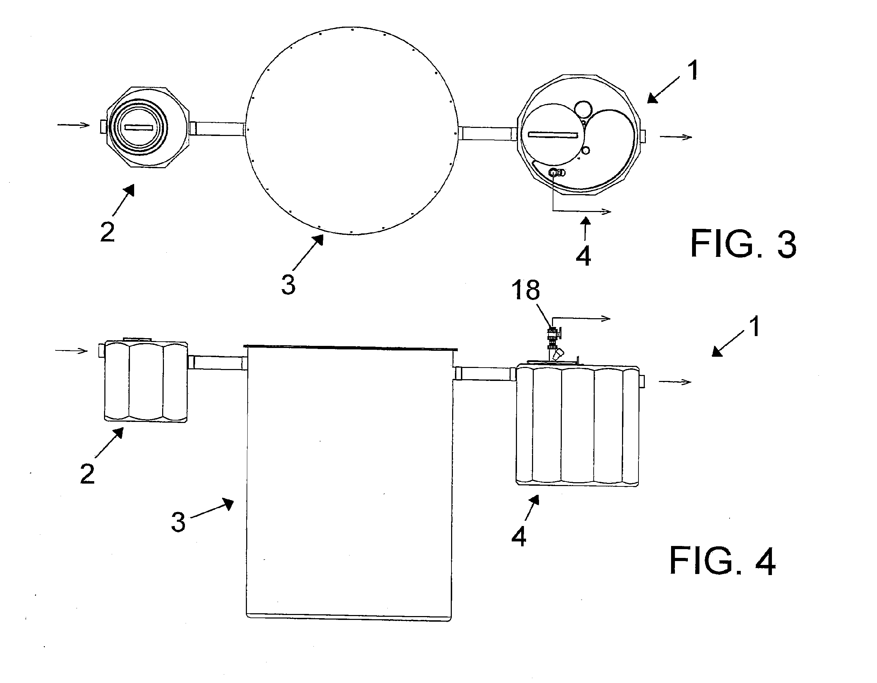

Figure 3 is a top plan view of the inventive system;
Figure 4 is a side elevation view of the inventive system;
   and

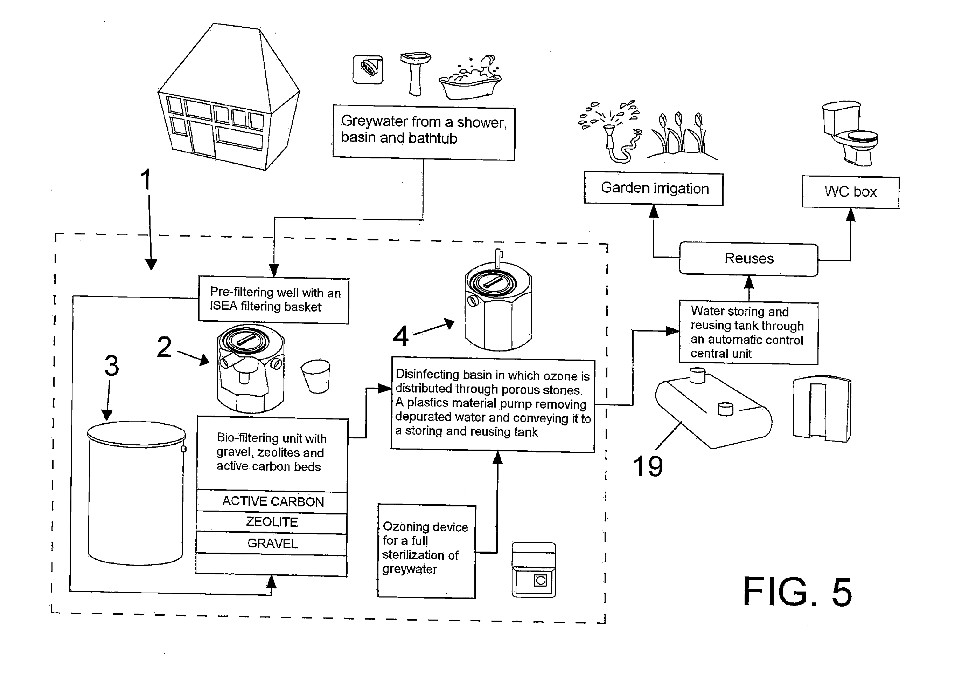

Figure 5 is a schematic view showing an application example of the system according to the present invention.

### DESCRIPTION OF THE PREFERRED EMBODIMENTS

With reference to the number references of the above mentioned figures, the system for depurating an reusing greywater, by disinfecting said greywater with ozone, according to the present invention, which has been generally indicated by the reference number 1, comprises, tandem arranged, pre-filtering means 2, bio-filtering means 3 and disinfecting means 4.

Said pre-filtering means 2 perform a pre-filtering by causing said greywater to fall at an inlet of the system, by means of a filter, either of a manual or of an automatic type, to restrain a hair and other coarse materials.

Greywater is fed to the system 1 through a feeding inlet 5 provided through the holding body 6 of the pre-filtering means.

The filter may be a basket filters 7, engaged in a suitable engaging well, as in the shown example, or it may be of any other types.

The pre-filtered materials are conveyed to the bio-filtering means 3 comprising a dedicated compartment therewithin are assembled a plurality of filtering layers, respectively consisting of a coarse gravel material, zeolites and an active carbon filtering material.

The filtered material passes through the filtering layers from downward to upward, thereby being subjected to a physical type of gradual depuration.

Filtered water is finally conveyed to the disinfecting means which feed ozone, at a suitable concentration, to an accumulation and contact basin.

As it is known, ozone has a very high sterilizing capability, and is adapted to abruptly reduce, in a short time, the concentrations of pathogen agents possibly present in waste water.

Ozone is adapted to provide a reduction up to four or five orders, with a reduction of about 99.99% of pathogen agents.

Thus, at the outlet of the disinfecting means a sanified water is provided, which may be reused in a safety manner for the indicated applications.

Said bio-filtering means 3 comprises a holding cylinder 8, in which three filtering baskets are arranged.

A first filtering basket 9, arranged at a bottom position, holds therein a filtering material consisting of a coarse gravel material.

A second filtering basket 10, arranged at a middle position, holds therein a zeolites filtering material.

The third filtering basket 11, arranged at a top position, holds therein a filtering material consisting of active carbon.

The waste water coming from the pre-filtering process, will enter the bio-filtering unit 3 through a delivery pipe 12, or tube, arranged at the top portion of the holding cylinder 8 but which is extended, inside said cylinder, up to the bottom 13 therefrom it enters the first gravel filtering layer.

The water is progressively filtered, by raising, from the first gravel layer, to the zeolites layer and finally to the active carbon layer.

Filtered water is conveyed from the bio-filtering unit 3 to the disinfecting means 4 through a top inlet tube 14 or pipe entering a disinfecting basin 15 comprising an ozonizing apparatus.

Said ozonizing apparatus comprises an environment-air dryer, for drying environment air sucked through a pneumatic pump having a pump flow rate of 250 l/h.

Said air being conveyed under pressure to two candle assemblies, or ozonizing cells, which, through a high AC voltage corona effect, add ozone to said air in an amount of 4g/m².

The thus obtained ozone and air mixture being injected, through two or more porous stones 16, into the accumulating basin 15 holding water to be processed.

The water processing will depend on the ozone/water contact type which is usually of about 14 hours.

The ozonizing and recovery times are only indicative and could be varied.

After the above period of time, water will be ready to be pumped to the using applications therefor it is provided.

Then, the water processed by said disinfecting means is pumped by an electropump 17 and conveyed, through an outlet 18, to a water storing tank 19.

At night time, as greywater to be processed is absent or minimum, the apparatus carries out, under a control of a programmed inner logic device, a regeneration or recovery of silicon salts present in said dryer, so as to bring them to about 70°C for about 10 hours.

At the end of the regenerating or recovery cycle, the apparatus automatically resets the water processing operating cycle.

The electric consume is very small: about 80W at 220V 50Hz, like that of a small bulb.

The system or ozonizing cells are mounted on a wall of a closed and dry environment, such a staircase under space, a garage, a cellar and so on, near a domestic current mains outlet.

Then it would be sufficient to convey a small tube made of a Rislan material and having a diameter of 8-10 mm to the water being processed accumulating basin.

It has been found that the invention fully achieves the intended aim and objects.

In fact, the invention provides a system allowing to process greywater so as to allow said greywater to be reused, in particular to be conveyed to WC boxes, for irrigating gardens, or cleaning buildings.

Processed water is conveyed to the use places upon storing it in an accumulating tank, which may be the same tank as that for collecting rain water.

The inventive system has many advantages, from economic and functional standpoints.

In particular, the inventive system does not require any basin projecting from the ground, provides a high quality level processed water, as a very small electric consume and a very safe operation.

A further very important functional advantage of the inventive system is that it operates in a gully automatic manner.

In practicing the invention, the used materials, as well as the contingent size and shapes, can be any, depending on requirements.

## Claims

1. A system for depurating and reusing grey water, by disinfecting said grey water with ozone, **characterized in that** said system comprises tandem arranged pre-filtering means, bio-filtering means and disinfecting means, said pre-filtering means performing a pre-filtering by causing said grey water to fall at an inlet of the system, to restrain coarse materials in said grey water, said bio-filtering means comprising a plurality of filtering layers performing a gradual physical depuration of water flows to be further filtered coming from the pre-filtering means, through filtering layers from downward to upward, filtered water being finally caused to pass through said disinfecting means feeding ozone into an accumulation and contact basin.

2. A system according to claim 1, **characterized in that** said grey water enters said system through an inlet of a pre-filtering means holding body, said pre-filtering means comprising a basket or drum filter arranged in a basket filter arrangement well.

3. A system according to claim 1, **characterized in that** said bio-filtering means comprise a holding cylinder including three filtering baskets, a first filtering basket arranged at a bottom position, and containing a filtering material including a coarse
gravel material, a second basket arranged at a middle position and containing a zeolites filtering material,
and a third basket arranged at a top position and containing an active carbon filtering material.

4. A system according to claim 3, **characterized in that** outlet water from the pre-filtering means enters the bio-filtering means through a delivery pipe arranged at a top portion of said holding cylinder and extending, in said holding cylinder, to a bottom of said cylinder therefrom it penetrates into the first gravel material filtering layer.

5. A system according to one or more of the preceding claims, **characterized in that** filtered water is conveyed from the bio-filtering means to said disinfecting means through a top inlet pipe penetrating a disinfection basin including an ozonizing apparatus.

6. A system according to one or more of the preceding claims, **characterized in that** said ozonizing apparatus comprises an environmental air dryer, for drying environmental air sucked by a pneumatic pump, said air being conveyed under pressure to two candle assemblies or ozonizing cells, which, through by a high AC voltage corona effect, add ozone to said air, the thus obtained ozone and air mixture being injected, through two or more porous stones, into an accumulation basin holding water to be processed.

7. A system according to one or more of the preceding claims, **characterized in that** water processed by said disinfecting means is pumped by an electropump and conveyed, through an outlet, to a water storing tank.

8. A system according to one or more of the preceding claims, **characterized in that** in night time, as grey water to be processed is absent or minimum, the apparatus carries out, under a control of programmed inner logic device, a regeneration of silicon salts present in the dryer, and, at the end of the regenerating cycle, the apparatus automatically resetting the water processing operating cycle.

9. A system according to one or more of the preceding claims, **characterized in that** said ozonizing cells are mounted on a wall of a closed and dry environment, such as a staircase underspace, a garage, a cellar, and so on, near a domestic current mains outlet.

10. A system according to one or more of the preceding claims, **characterized in that** processed water is conveyed to water user devices after having stored said processed water in an accumulating tank, which may be the same tank as a rainfall recovering tank.
